# EUROPEAN PATENT SPECIFICATION

(11) **EP 3 256 010 B1**
(45) Date of publication and mention of the grant of the patent: **24.06.2020**
(21) Application number: 16749684.3
(22) Date of filing: 09.02.2016
(51) Int. Cl.: A23L 29/20, A23L 29/256, A23L 29/269

(54) **COMPOSITIONS AND METHODS FOR DUAL-TEXTURE BUBBLE BITS**
ZUSAMMENSETZUNGEN UND VERFAHREN FÜR DUALE TEXTURBLASENBITS
COMPOSITIONS ET PROCÉDÉS POUR DES NOYAUX DE PERLES À TEXTURE DOUBLE

(30) Priority: 09.02.2015 CN 201510067802
(43) Date of publication of application: 20.12.2017
(73) Proprietor: The Coca-Cola Company, Atlanta, GA 30313 (US)
(72) Inventor: ZHU, Sheng, Kui, Atlanta, GA 30313 (US); WANG, David, Atlanta, GA 30313 (US); GAO, Fujun, Atlanta, GA 30313 (US); SHAO, Shuyan, Atlanta, GA 30313 (US); GUO, Elsie, Atlanta, GA 30313 (US); LIAO, Jianping, Atlanta, GA 30313 (US)
(74) Representative: Dehns
(86) International application number: PCT/US2016/017089
(87) International publication number: WO 2016/130507

(56) References cited:
- WO-A1-00/18835
- WO-A1-2008/037576
- WO-A1-2008/068242
- WO-A1-2011/153065
- WO-A1-2014/167373
- KR-A- 20140 112 339
- US-A- 4 190 676
- US-A- 4 501 759
- US-A- 4 853 236
- US-A- 4 877 628
- US-A- 4 880 645
- US-A1- 2008 193 608
- US-A1- 2012 034 351
- US-A1- 2014 212 548
- US-B2- 8 088 433

## Description

### FIELD OF THE INVENTION

The principles of the present invention relate generally to the field of food products and beverages. In particular, composition and methods for producing dual-texture bubble bits that can withstand extended shelf-storage in a ready-to-drink beverage without exhibiting structural degradation are provided by the principles of the present invention.

### BACKGROUND OF THE INVENTION

In China (including Taiwan and Hong Kong), bubble tea (milk tea which is blended with black tea soup, milk and sugar) with an abundant selection of different kinds of bubble bits is very popular. However, such products are generally freshly-prepared and served on a per-order or per-customer basis in small bubble tea shops and quick-serving restaurants. This limited availability can be inconvenient for customers. Traditionally, tapioca balls (i.e., starch balls) are commonly used for bubble tea, but recently more and more types of particulates, such as jelly chunks, red beans, and nata de coco, are becoming increasingly popular. Unfortunately, traditional bubble tea is not shelf-stable as the tapioca balls readily disintegrate in the aqueous beverage shortly after serving. Non-shelf stable tapioca balls also limit the choice of beverage in which the tapioca balls are served (e.g., no sparkling beverages). Therefore, development of new products and formulations of shelf-stable ready-to-drink bubble teas with satisfactory mouth-feel and stability represents an ongoing challenge for the beverage industry.

Particles to be suspended in beverages are disclosed in e.g., US 2014/0212548; KR 20140112339 and WO 2014/167373.

### SUMMARY OF THE INVENTION

In one aspect, the principles of the present invention provide a dual-texture food composition. According to the invention, the compoisition comprises an outer layer and an inner layer. The outer layer includes high G-type alginate or high M-type alginate or pectin. In some embodiments, the ratio of high G-type alginate to high M-type alginate or pectin is greater than 1. The inner layer includes fruit juice or puree, a gum, and an insoluble calcium salt. In certain embodiments, the fruit is selected from the group consisting of grapefruit, cherry, rhubarb, banana, passion fruit, lychee, grape, apple, orange, mango, plum, prune, cranberry, pineapple, peach, pear, apricot, blueberry, raspberry, strawberry, blackberry, huckleberry, boysenberry, mulberry, gooseberry, prairie berry, elderberry, loganberry, dewberry, pomegranate, papaya, lemon, line, tangerine, passion fruit, kiwi, persimmon, currant, quince, and guava, or combinations thereof. Other fruit may alternatively be utilized.

The composition may include high G-type alginate from about 0.01 - 1.50% (w/w). In other embodiments, the composition includes high M-type alginate from about 0.01 -1.50% (w/w). In some embodiments, the composition includes an insoluble calcium salt from about 0 - 2.0% (w/w). In yet other embodiments, the composition includes a gum from about 0.01 - 1.5% (w/w). In certain embodiments, the inner layer mixture further comprises a gum selected from the group consisting of xanthan and konjac. In particular embodiments, the inner layer further includes xanthan and konjac resulting in a solid or solid inner layer. In separate embodiments, the inner layer includes xanthan with no other gum, resulting in a liquid inner layer. In some embodiments, the dropping temperature for a solid inner layer is higher than that of a liquid inner layer.

The composition may include natural, or artificial, non-nutritive or nutritive sweetener. The non-nutritive sweetener may include at least one selected from the group consisting of *Stevia rebaudiana* extract, stevioside, cyclamate, neotame, erythritol, luo han guo, monk fruit, aspartame, saccharine, acesulfame potassium, and sucralose, or any combination or derivative thereof. In one embodiment the non-nutritive sweetener is rebaudioside A (Reb A). In yet another embodiment, the composition includes a nutritive sweetener. In some embodiments, the nutritive sweetener includes at least one selected from the group consisting of sucrose, fructose, glucose, polydextrose, and trehalose, from natural or purified sources or any combination or derivative thereof. In particular embodiments, the non-nutritive or nutritive sweetener can be included in the inner layer, outer layer, or both. In certain embodiments, the composition includes an additive selected from the group consisting of salts, food-grade acids, caffeine, emulsifiers, stabilizers, antioxidants, coloring agents, preservatives, energy-boosting agents, tea, botanicals, coffee, minerals and vitamins.

The principles of the present invention further provide a method of producing a dual-texture food composition, where the method combines high G-type alginate or high M-type alginate or pectin to form an outer layer mixture. Additionally, the method combines a fruit juice or puree with a gum, calcium ions and an insoluble calcium salt to form an inner layer mixture. In yet another embodiment, the method includes adding drops of the inner layer mixture into a larger volume of the outer layer mixture to form bubble bits. In other embodiments, the method includes separating and washing the bubble bits. In yet other embodiments, the method includes placing the bubble bits in a beverage or preservative solution.

The fruit juice or puree may be selected from the group consisting of grapefruit, cherry, rhubarb, banana, passion fruit, lychee, grape, apple, orange, mango, plum, prune, cranberry, pineapple, peach, pear, apricot, blueberry, raspberry, strawberry, blackberry, huckleberry, boysenberry, mulberry, gooseberry, prairie berry, elderberry, loganberry, dewberry, pomegranate, papaya, lemon, line, tangerine, passion fruit, kiwi, persimmon, currant, quince, and guava, or combinations thereof.

In some embodiments, the method includes high G-type alginate from about 0.01 - 1.50% (w/w). In other embodiments, the method includes high M-type alginate from about 0.01 - 1.50% (w/w). In some embodiments, the method includes an insoluble calcium salt from about 0 - 2.0% (w/w). In yet other embodiments, the method includes a gum from about 0.01 - 1.50% (w/w). In certain embodiments, the inner layer mixture further comprises a gum selected from the group consisting of xanthan and konjac. In particular embodiments, the inner layer further includes xanthan and konjac resulting in a solid or solid inner layer. In separate embodiments, the inner layer includes xanthan with no other gum, resulting in a liquid inner layer. In some embodiments, the dropping temperature for a solid inner layer is higher than that of a liquid inner layer.

The method may include producing a composition including natural, or artificial, non-nutritive or nutritive sweetener. In some embodiments, the method includes producing a composition including a non-nutritive sweetener including at least one selected from the group consisting of *Stevia rebaudiana* extract, stevioside, cyclamate, neotame, erythritol, luo han guo, monk fruit, acesulfame potassium, aspartame, saccharine, and sucralose, or any combination or derivative thereof. In one embodiment the method includes producing a composition including the non-nutritive sweetener rebaudioside A (Reb A). In yet another embodiment, the method includes producing a composition including a nutritive sweetener. In some embodiments, the method includes producing a composition including a nutritive sweetener including at least one selected from the group consisting of sucrose, fructose, glucose, polydextrose, and trehalose, from natural or purified sources. In particular embodiments, the method includes including the non-nutritive or nutritive sweetener to the inner layer, outer layer, or both. In certain embodiments, the method includes producing a composition including an additive selected from the group consisting of salts, food-grade acids, caffeine, emulsifiers, stabilizers, antioxidants, coloring agents, preservatives, energy-boosting agents, tea, botanicals, coffee, minerals and vitamins.

The principles of the present invention may further provide a beverage comprising the dual-textured food compositions described above. Alternatively, the principles of the present invention may provide a beverage created by the method of producing the dual-textured food composition described above.

These and other features, aspects, and advantages of the principles of the present invention will become better understood with reference to the following description and claims.

### BRIEF DESCRIPTION OF THE FIGURES

**FIG. 1****.** Schematic representation of dual-texture bubble bit.
**FIG. 2****.** Illustration of fruit tea and sparkling beverages including dual-texture bubble bits.
**FIG. 3****.** Illustration of pomelo busting bubbles.
**FIG. 4****.** Graph representing relative hardness of dual-texture bubble bits made with high "G" alginate and high "M" alginate, without insoluble calcium salts.
**FIG. 5****.** Graph representing relative hardness of dual-texture bubble bits made with high "G" alginate and high "M" alginate, with insoluble calcium salts.
**FIG. 6****.** Graph representing relative hardness of dual-texture bubble bits made with high "M" alginate with and without insoluble calcium salts.
**FIG. 7****.** Graph representing relative hardness of dual-texture bubble bits made with high "G" alginate with and without insoluble calcium salts.
**FIG. 8****.** Flowchart representing the method for producing dual-layer bubble bits.
**FIG. 9****.** Illustration and graph representing the method for measuring the hardness of bubble bits.
**FIG. 10****.** Graph representing relative hardness of dual-texture bubble bits stability in bubble tea.

### DETAILED DESCRIPTION OF THE INVENTION

The principles of the present invention are based at least in part on the surprising discovery that a dual-texture food composition, comprising an outer layer including a mixture of alginate(s) or pectin or gellan gum, and an inner layer including fruit juice or puree, a gum, calcium ions and an insoluble calcium salt, can maintain the organoleptic characteristics (texture and hardness) of freshly-prepared bubble tea bits in a ready-to-drink beverage without losing structural stability after prolonged shelf storage. Additionally, the dual-texture bubble bit can be made to simulate a liquid-centered bubble bit or a chewy-centered bubble bit. The challenge facing shelf-stable, ready-to-drink beverages with bubble bits is the development of bubble bits that are stable in a variety of aqueous environments over a reasonable shelf-life period. Accordingly, the principles of the present invention provide a dual-textured bubble bit with excellent texture and stability created using a novel composition and process.

A common problem experienced by freshly-prepared bubble teas is that suspended bubble bits deteriorate over time in the beverage liquid becoming soft/mushy and unpalatable. Moreover, this requirement for freshly-prepared bubble tea limits the consumers options for where, when, and how the product can be consumed and/or purchased. Bubble bits, tapioca balls, added to beverages are very popular and can deliver a multilayer texture which consumers enjoy. Since most ready-to-drink beverages are not manufactured immediately on-site for potential consumers, such beverages are often stored for extended periods before consumption and any bubble bits in the beverages are to withstand degradation, as understood in the art. Despite the appeal of texture, the problem of multilayered bubble with acceptable mouth feel and shelf-storage stability has not been adequately addressed by the prior art, which results in less consumer appeal--especially in certain cultures, such as Asia.

In order to address this long standing issue and create a dual-textured bubble bit with superior mouth-feel and stability, experiments were conducted to determine a combination of alginates and gums (i) that may be molded into small spheres capable of resisting the high temperatures of pasteurization (at least >85°C for highly acidic beverages (pH< 4.2) or >130°C for low acid beverages (pH> 4.2); (ii) that resist degradation or decomposition in an aqueous beverage matrix, and (iii) have the organoleptic texture of traditional bubble tea bubble bits. The composition and processing of the dual-texture bubble bit mixture plays a significant role in how the dual-texture bubble bit tastes, feels, and reacts with the beverage liquid. Since a beverage with bubble bits has a ready-to-drink action standard, certain functional levels and taste expectations are to remain consistent, thus making the creation of a dual-texture bubble bit difficult. As such, one of the structural and functional differences of the principles of the present invention is the unexpected parity in taste, mouth-feel, and functionality, once processed, to a freshly-prepared bubble bit standard bubble tea counterpart beverage. As a result of the extensive testing of various formulations, the principles of the present invention provide a dual-textured bubble bit that can be manufactured for all kinds of beverages without the risk of the bubble bit substantially degrading in the beverage during storage while still maintaining similar organoleptic properties to an equivalent, freshly-prepared bubble tea bubble bit.

As used herein, "dual-texture bubble bit" is generally an irreversible, heat-stable (up to 150°C) dual-layered gel made from alginate, natural fruit juice/puree, a gum, and insoluble calcium ions which can be formed into a desirable shape and/or size. In one embodiment the shape is a sphere with a diameter from 3-8 mm. The outer layer of the bubble bit may be formed from alginate and/or pectin or gellan gum gel. Gellan gum is a polysaccharide, which is fermented from glucose, ammonium nitrate, other inorganic salts, and *Pseudomonas elodea* under pH neutral conditions. Low acyl gellan gum can form a gel with calcium ions, which is heat and water stable (up to 150°C). Pectin is extracted from citrus or apple peel. Low ester pectin, which is normally soft, can also form gel in presence of calcium ions.

In a certain embodiment, the inner layer, or core of the dual-textured bubble bit, is a liquid or gel. The dual-texture nature of the food composition described herein is, in part, a function of the structural combination of a firm outer layer encapsulating the softer inner layer or core. The outer layer thus functions to protect the softer inner layer during processing and end-product shelf storage.

A typical example of a beverage containing such dual-texture bubble bits is bubble tea. In particular embodiments, the dual-texture bubble bit includes an inner layer of fruit juice or puree. In alternative embodiments, principles of the present invention can be used to provide beverages of carbonated and non-carbonated drinks, frozen ready-to-drink beverages, tea beverages, dairy beverages, as well as flavored waters, enhanced waters, fruit juice and fruit juice-flavored drinks, sports drinks, and alcoholic products. In an embodiment, the density of the dual-texture bubble bit inner layer can be altered by increasing or decreasing the amount of gum. As appreciated by one of skill in the art, any of these beverages can be the starting material to be combined according to the methods herein, or are beverages to which dual-texture bubble bits can be added.

As used herein, "alginate salt" is the term used for the salts of alginic acid, but can also refer to alginic acid and all the derivatives thereof. In some publications the term "algin" is used instead of alginate. Alginate is present in the cell walls of brown algae as the calcium, magnesium and sodium salts of alginic acid.

Alginate is a linear co-polymer composed of two monomeric units, D-mannuronic acid and L-guluronic acid. These monomers occur in the alginate molecule as regions made up exclusively of one unit or the other, referred to as M-blocks or G-blocks, or as regions in which the monomers approximate an alternating sequence. Although the ratio of mannuronic acid to guluronic acid (M:G ratio) can be obtained relatively easily, the detailed molecular compositions of alginates in terms of block lengths and block distributions are much more difficult to determine. As a result, alginates are usually referred to as "high M" or "high G," depending on the proportions of mannuronic acid and guluronic acid they contain.

As appreciated by one of skill in the art, water is a basic ingredient in the beverages disclosed here, typically being the primary liquid portion in which the high-concentrate beverage syrup is dissolved, emulsified, suspended or dispersed. Those of ordinary skill in the art will understand that, for convenience, some ingredients are described herein, in certain cases, by reference to the original form of the ingredient in which it is added to the beverage product formulation. Such original form may differ from the form in which the ingredient is found in the finished beverage product. For example, orange juice is generally made by extraction from the fresh fruit, by desiccation and subsequent reconstitution of dried juice, or by concentration of the juice and the subsequent addition of water to the concentrate. The beverage to be combined with a dual-texture bubble bit, for instance, can be fresh, can be one containing pulp, or can be one from which pulp has been removed by centrifugation or filtration.

Once made, the dual-texture bubble bit can find use as in a beverage of its own or can be mixed with one or more other particulates. Carbon dioxide can be used to provide effervescence to certain embodiments of the beverages disclosed herein. Any of the techniques and carbonating equipment known in the art for carbonating beverages can be employed.

As used herein, "electrolyte solution" refers to a drink containing sodium, potassium, magnesium, calcium, or zinc salts to replenish the body's electrolyte and ion levels that can become diminished by dehydration caused by exercise and/or hot environments. In certain embodiments, the dual-texture bubble bit beverage includes an electrolyte solution of salts selected from the group consisting of sodium, potassium, magnesium, calcium, and zinc, or combinations thereof.

In other embodiments, the dual-texture bubble bit includes sodium alginate from about 0.01 - 1.50% (w/w). In particular embodiments, the dual-texture bubble bit includes citric acid from about 0 - 2.0% (w/w). In certain embodiments, the dual-texture bubble bit includes calcium lactate about 0.05 - 0.40% (w/w). In some embodiments, the dual-texture bubble bit includes sodium citrate about 0 - 2.0% (w/w). In yet other embodiments, the dual-texture bubble bit includes sucrose and/or glucose about 0 - 30% (w/w).

The salts can be present at similar or different amounts relative to each other. At least the organoleptic, functional or nutritional properties of the dual-texture bubble bit is similar when compared to an equivalent, freshly-prepared bubble tea bubble bit.

As used herein, "equivalent, freshly-prepared bubble tea bubble bit" is a traditional, bubble tea tapioca ball that has not be processed in accordance with the principles of the present invention.

As used herein, a "non-nutritive sweetener" is one that does not provide significant caloric content in typical usage amounts, i.e., is one which imparts less than 5 calories per 8 ounce serving of beverage to achieve the sweetness equivalent of 10 Brix of sugar. In various embodiments, the high-concentrate beverage syrup composition further includes a non-nutritive sweetener selected from *Stevia rebaudiana* extract, stevioside, cyclamate, neotame, erythritol, luo han guo, monk fruit, acesulfame potassium, aspartame, saccharine, and sucralose, or any combination or derivative thereof. In one embodiment the non-nutritive sweetener is rebaudioside A (Reb A).

As used herein, a "nutritive sweetener" is one that can provide significant caloric content in typical usage amounts, i.e., is one which imparts greater than 5 calories per 8 ounce serving of beverage to achieve the sweetness equivalent of 10 Brix of sugar. In various embodiments, the high-concentrate beverage syrup composition further includes a nutritive sweetener selected from the group consisting of sucrose, fructose, glucose, polydextrose, and trehalose, from natural or purified sources.

As used herein, degrees Brix (°Bx) is the sugar content of an aqueous solution. One degree Brix is 1 gram of sucrose in 100 grams of solution and represents the strength of the solution as percentage by weight (% w/w).

It should be understood that beverages and other beverage products can have any of numerous different specific formulations or constitutions. In general, a beverage typically comprises at least water, acidulant, and flavoring. The beverage products in accordance with the principles of the present invention include beverages, i.e., ready to drink formulations and the like. Juices suitable for use in at least embodiments include, for example, fruit, vegetable, and berry juices. In beverages employing juice, juice may be used, for example, at a level from about 0.2%, about 0.5%, about 1%, about 2%, about 3%, about 5%, about 10%, about 15%, about 20%, about 25%, about 30%, about 35%, about 40%, about 50%, about 60%, about 70%, about 80%, about 90% to about 99% juice by weight of the beverage.

Accordingly, the principles of the present invention provide a method of producing a dual-texture bubble bit optionally comprising a bursting, liquid-like inner layer or a firm, chewy inner layer. Beverages, of which the taste profiles may be modified by the addition of sweeteners, can be provided. Various beverages, such as fruit juices, can contain a significant amount of acid and thus increase the rate of deterioration of the dual-texture bubble bits contained within.

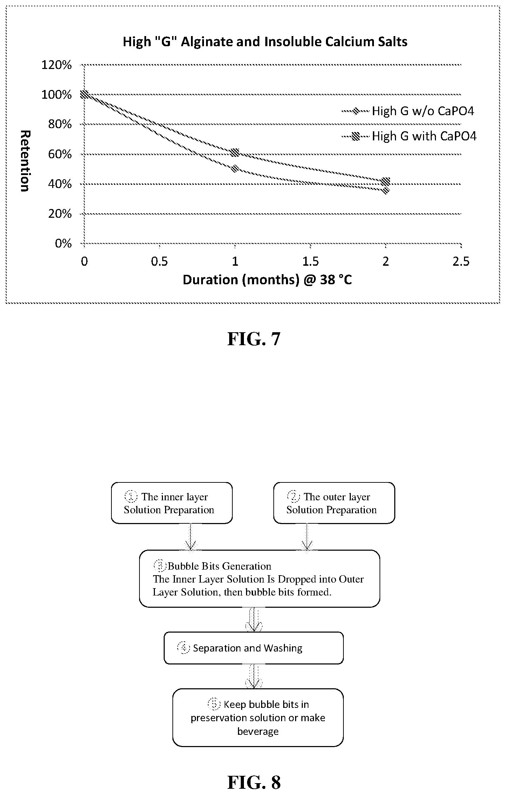

To prepare a dual-texture bubble bit of the present invention standard colloid and protein science food and beverage formulation methods can be used. Examples of such methods can be found in U.S. Patent Nos. 3,892,870, and 6,589,328, and Chinese Patent CN102640963. The principles of the present invention provide a method of producing a dual-texture bubble bit comprising an outer layer with a unique combination of alginate or pectin or gellan gum, and an inner layer with a combination of fruit puree or juice, a gum, calcium ions and an insoluble calcium salt. An inner layer solution can be dropped into an outer layer solution. Calcium ions which diffuse out from the inner layer, can react with sodium alginate to form a skin (the outer layer). The thickness of the skin can be controlled by varying the concentrations of calcium ions and sodium alginate, as well as varying the soaking time of bubble bits in the sodium alginate solution. The bubble bits can then be removed from the solution, washed, and then placed in a preservation solution or beverage (FIG. 8). Furthermore, the dual-texture bubble bit can be optionally prepared with a soft, liquid-like inner layer or a firmer, chewy inner layer.

Non-nutritive sweeteners, also called artificial sweeteners, or high-intensity sweeteners, are agents that exhibit a sweetness many times that of sucrose. Examples of high-intensity sweeteners include saccharin, cyclamate, aspartame, monatin, alitame, acesulfame potassium, sucralose, thaumatin, stevioside, glycyrrhizin, sucralose, and neotame. Therefore, beverages such as fruit juice, sports drinks, and soft drinks, are sweetened with non-nutritive sweeteners that may not occur naturally in the source ingredients for the beverage and thus are generally regarded as undesirable by many consumers. By contrast, nutritive sweeteners generally refer to naturally occurring substances. Examples of nutritive sweeteners include glucose, fructose, maltose, galactose, maltodextrin, trehalose, fructo-oligosaccharides, and trioses. Due to the prevalence and popularity of non-nutritive sweeteners in beverages, several processes have been described for modifying the taste profile of beverages that contain these non-nutritive sweeteners.

As used herein, "additive" means food additive, or a substance added to food to preserve flavor or enhance its taste and appearance. In some embodiments, the composition further includes an additive selected from salts, food-grade acids, caffeine, emulsifiers, stabilizers, antioxidants, coloring agents, preservatives, energy-boosting agents, tea, botanicals, coffee, minerals and vitamins. Further, it will generally be an option to add other ingredients to the formulation of a particular beverage embodiment, including flavorings, electrolytes, tastents, masking agents, flavor enhancers, carbonation, or caffeine.

Definitions and methods described herein are provided to better define the present disclosure and to guide those of ordinary skill in the art in the practice of the present disclosure. Unless otherwise noted, terms are to be understood according to conventional usage by those of ordinary skill in the relevant art.

In some embodiments, the term "about" is used to indicate that a value includes the standard deviation of the mean for the device or method being employed to determine the value. In some embodiments, the numerical parameters should be construed in light of the number of reported significant digits and by applying ordinary rounding techniques.

In some embodiments, the terms "a" and "an" and "the" and similar references used in the context of describing a particular embodiment (especially in the context of certain of the following claims) can be construed to cover both the singular and the plural, unless specifically noted otherwise. In some embodiments, the term "or" as used herein, including the claims, is used to mean "and/or" unless explicitly indicated to refer to alternatives only or the alternatives are mutually exclusive.

The terms "comprise," "have" and "include" are open-ended linking verbs. Any forms or tenses of one or more of these verbs, such as "comprises," "comprising," "has," "having," "includes" and "including," are also open-ended. For example, any method that "comprises," "has" or "includes" one or more steps is not limited to possessing only those one or more steps and can also cover other unlisted steps. Similarly, any composition or device that "comprises," "has" or "includes" one or more features is not limited to possessing only those one or more features and can cover other unlisted features.

All methods described herein can be performed in any suitable order unless otherwise indicated herein or otherwise clearly contradicted by context. The use of any and all examples, or exemplary language (e.g., "such as") provided with respect to certain embodiments herein is intended merely to better illuminate the present disclosure and does not pose a limitation on the scope of the present disclosure otherwise claimed. No language in the specification should be construed as indicating any non-claimed element essential to the practice of the present disclosure.

### EXAMPLES

The following non-limiting examples are provided to further illustrate the present disclosure. It should be appreciated by those of skill in the art that the techniques disclosed in the examples that follow represent approaches the inventors have found function well in the practice of the present disclosure, and thus can be considered to constitute examples of modes for its practice.

### Example 1

### Pomelo Dual-Texture Bursting Bubble Bits

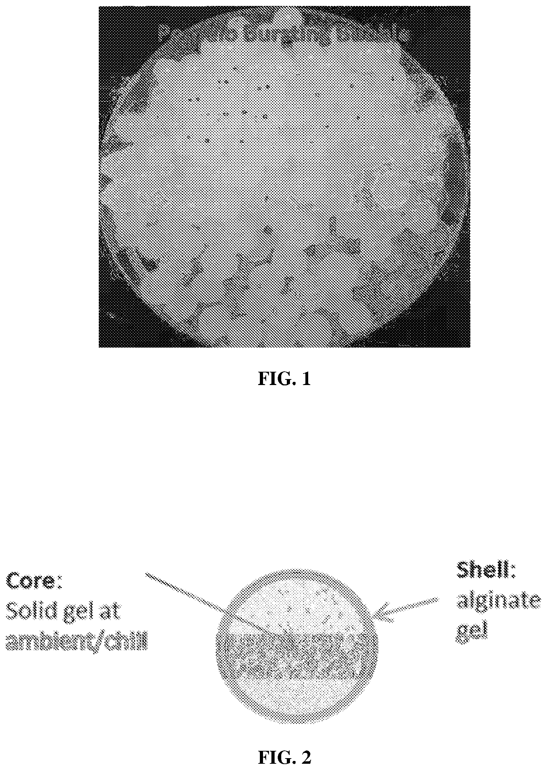

The following exemplifies the composition of dual-texture bubble bits using alginate and/or pectin or gellan gum gel in the outer layer and xanthan gum and fruit puree or juice in the inner layer. Alginate is extracted from seaweed and can quickly form a gel with calcium ions. The gel is irreversible and heat stable (up to 150°C) in presence of calcium ions. The inner layer or core of the bubble bit is liquid or gel while the outer layer forms a shell whose primary function is to hold the core ingredients inside and protect them during processing and prolonged shelf storage of the finished product (FIG. 2). To provide a flowing, liquid-bursting bubble bit inner layer or core, a low percentage of xanthan gum was used.

**Table 1. Preparation of bursting sensation dual-texture bubble bit using pomelo puree and pectin.**

| **Outer layer (skin/shell)** | **Percent (% w/w)** |
|---|---|
| Demineralized water | 99.40 |
| Sodium alginate | 0.54 |
| Pectin | 0.06 |
| Total | 100 |
| | |

| **Inner layer (core)** | |
|---|---|
| RO water | 57.45 |
| Pomelo skin puree | 40.00 |
| Calcium lactate | 1.50 |
| Sugar | 0.50 |
| Xanthan gum | 0.35 |
| Calcium phosphate (Ca₃(PO₄)₂) | 0.20 |
| Total | 100 |

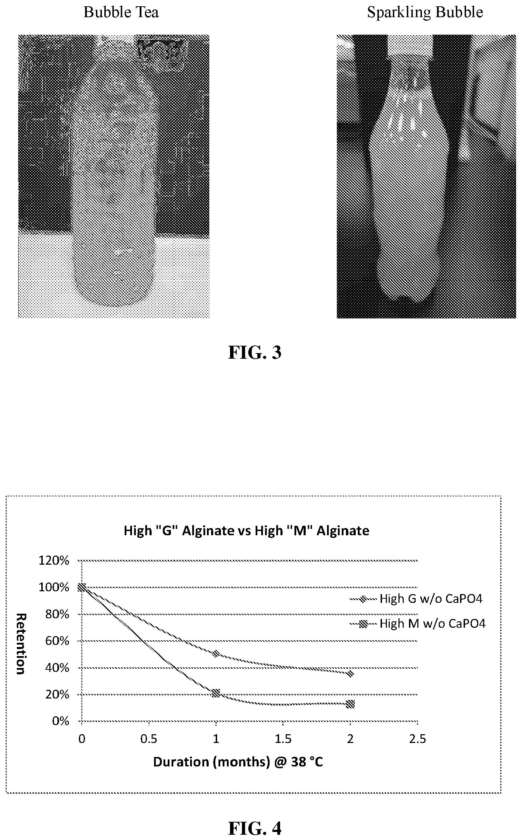

The combination of water, sugar, xanthan gum, sodium alginate, calcium lactate, insoluble calcium salts, and pomelo puree or juice (Table 1) was prepared using the following process (FIG. 8) to produce a dual-texture bubble bits with a gel-like shell and a liquid-like bursting core (FIGs. 1 and 3). The size of the dual-texture spherical bubble bits was adjustable, with a 3-8 mm diameter preferred. Alternative sizes may also be used.

### Example 2

### Mango Dual-Texture Solid, Chewy Bubble Bits

The following exemplifies the composition of a solid, chewy-centered dual-texture bubble bit prepared with alginate and pectin in the outer layer and xanthan gum and fruit puree in the inner layer. To provide a chewy, elastic texture to the bubble bit inner layer or core, xanthan gum was used at a higher concentration than in Example 1 in addition to konjac gel. Konjac is extracted from konjac plant root and makes a gel that is thermal reversible (forms a solid gel at temperatures below about 65°C, and a flowing liquid at high temperatures above about 65°C).

**Table 2. Preparation of solid, chewy dual-texture bubble bit using mango puree and konjac.**

| **Outer layer (skin/shell)** | **Percent (% w/w)** |
|---|---|
| Demineralized water | 99.40 |
| Sodium alginate | 0.54 |
| Pectin | 0.06 |
| Total | 100 |
| | |

| **Inner layer (core)** | |
|---|---|
| Demineralized water | 77.10 |
| Mango puree | 20.00 |
| Calcium lactate | 1.50 |
| Xanthan gum | 0.84 |
| Konjac | 0.36 |
| Calcium phosphate (Ca₃(PO₄)₂) | 0.20 |
| Total | 100 |

The combination of water, sugar, xanthan gum, konjac, sodium alginate, calcium lactate, insoluble calcium salts, and mango puree or juice (Table 2) was prepared using the same process to produce a dual-texture bubble bit with a gel-like shell and a solid, chewy core.

### Example 3

### Dual-Texture Bubble Bits Outer Layer Stability

The following exemplifies the composition of a pomelo bubble tea beverage prepared with water, sucrose, tea powder, citric acid, sodium citrate, vitamin C, pomelo juice, pomelo flavor, and pomelo bursting bubble bits prepared as in Example 1.

**Table 3. Preparation of Pomelo Fruit Tea with Dual Texture Bubble Bits.**

| **Ingredients** | **Weight (g)** |
|---|---|
| Water | 1808.57 |
| Sucrose | 192.08 |
| Citric acid | 4.00 |
| Vitamin C | 0.30 |
| Sodium citrate | 1.00 |
| Calcium lactate | 4.00 |
| Glucose | 0.70 |
| Pomelo flavor | 1.50 |
| Tea powder | 1.00 |
| Pomelo juice | 80.00 |
| Dual-texture bubble bits | 100.00 |
| Total | 2193.15 |

Pomelo bubble tea samples were stored at different temperatures (4°C, 25°C, 38°C) and monitored for stability. Samples were evaluated using an internal sensory panel following 1 and 2 months of storage. Results show acceptable stability for beverage products including dual-texture bubble bits (Table 4).

**Table 4. Internal sensory results of bubble tea, juice, and sparkling beverages with bubbles.**

| | | **38°C vs 4°C Storage Stability** | |
|---|---|---|---|
| **Beverage type** | **Bubble type** | **After 1 month** | **After 2 months** |
| Orange juice | Dual texture bursting bubble bit | Acceptable | Acceptable |
| Pomelo Bubble Tea | Dual texture solid bubble bit | Acceptable | Acceptable |
| Pomelo Bubble Tea | Dual texture bursting bubble bit | Acceptable | Acceptable |
| Mango Sparkling | Dual texture bursting bubble bit | Acceptable | Acceptable |

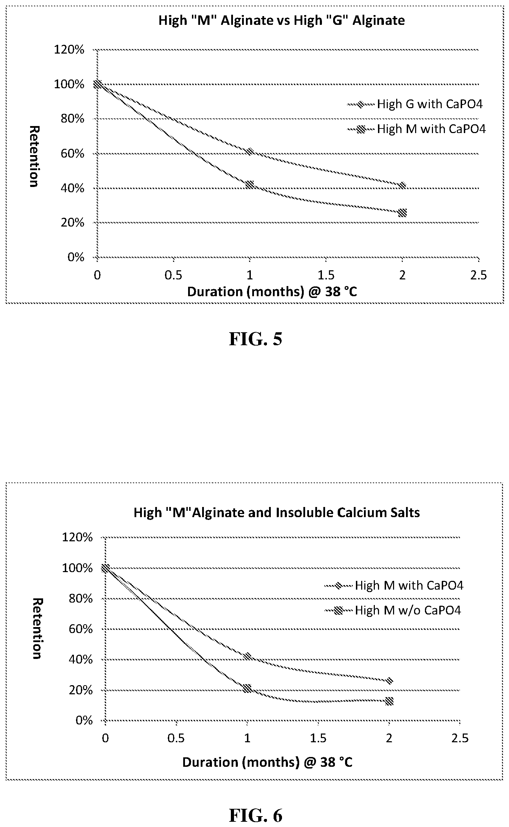

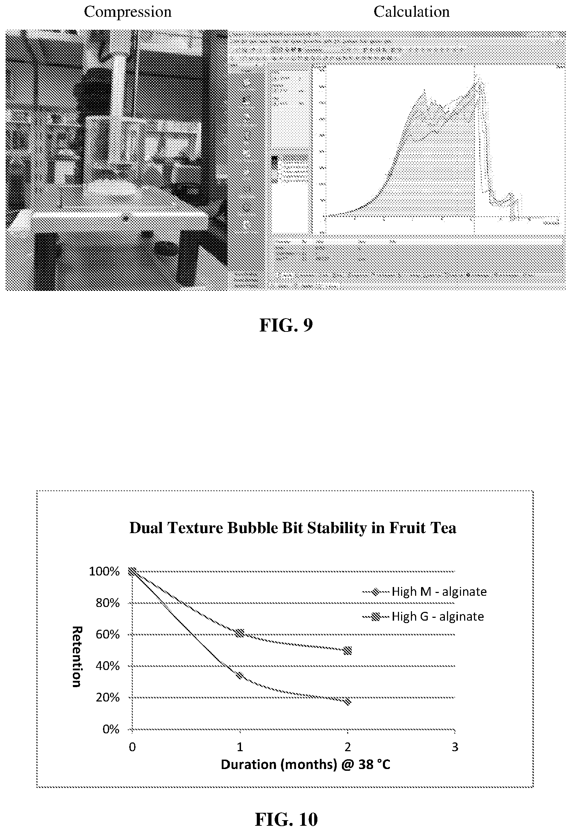

High "G" type alginate can improve product stability as compared to high "M" type alginate. Bubble hardness was measured using a texture analyzer (*TA.XTPlus* by Texture Technologies Corp.) (FIG. 10). Bubble bits were compressed to a certain deformation (e.g., 75%) using a texture analyzer with a probe and cup. The forced required for deformation correlates with hardness. Samples were analyzed six times and the average hardness recorded (FIG. 9). Results show that in the absence of insoluble calcium salts, bubbles of high "G" type alginate retain 35.6% of their original hardness after 2 months of storage at 38°C (FIGs. 4 and 6). By comparison, bubbles of high "M" type alginate typically retain 12.8% of their original hardness (FIGs. 4 and 7).

The residual hardness of bubbles made with high "G" type alginate was improved to 41.4% when the outer layer was prepared with insoluble calcium ions (FIGs. 5 and 6). Similarly, bubbles of high "M" type alginate increased their hardness retention to 25.7% under the same conditions (FIGS. 5 and 7). In addition, bubble bit stability was improved by adding soluble calcium salts to the beverage containing the bubble bits. Calcium salts, in the form of calcium lactate in the beverage containing bubble bits, can range from 0.05 - 0.40% (w/v).

## Claims

1. A dual-texture food composition comprising:
an outer layer including high G-type alginate and high M-type alginate or pectin; and
an inner layer including (i) fruit juice or puree, (ii) a gum, (iii) calcium ions, and (iv) an insoluble calcium salt.

2. The composition of claim 1, wherein the inner layer mixture further comprises xanthan gum to produce a liquid texture.

3. The composition of claim 2, wherein the inner layer mixture further comprises konjac and xanthan gum combined to produce a solid.

4. The composition of claim 1, further comprising a nutritive sweetener or a non-nutritive sweetener.

5. The composition of claim 1, further comprising an additive selected from the group consisting of salts, food-grade acids, caffeine, emulsifiers, stabilizers, antioxidants, coloring agents, preservatives, energy-boosting agents, tea, botanicals, minerals and vitamins.

6. The composition of claim 1, wherein the high G-type alginate to high M-type alginate or pectin is at a ratio of greater than 1.

7. The composition of claim 1, wherein the inner layer further includes from about 0.05% to about 0.40% calcium lactate and preferably from about 0.1% to about 0.30% calcium lactate.

8. A method of making a dual-texture food composition comprising:
combining high G-type alginate and high M-type alginate or pectin to form an outer layer mixture;
combining (i) fruit juice or puree, (ii) a gum, (iii) calcium ions, and (iv) an insoluble calcium salt to form an inner layer mixture.

9. The method of claim 8, wherein the inner layer mixture further comprises xanthan gum to produce a liquid texture.

10. The method of claim 8, wherein the inner layer mixture further comprises konjac and xanthan gum combined to produce a solid.

11. The method of claim 8, wherein combining high G-type alginate and high M-type alginate or pectin further includes combining a nutritive sweetener or a non-nutritive sweetener.

12. The method of claim 8, wherein combining high G-type alginate and high M-type alginate or pectin further includes combining an additive selected from the group consisting of salts, food-grade acids, caffeine, emulsifiers, stabilizers, antioxidants, coloring agents, preservatives, energy-boosting agents, tea, botanicals, minerals and vitamins.

13. The method of claim 8, wherein combining the high G-type alginate to high M-type alginate or pectin is performed to produce a ratio of greater than 1.

14. The method of claim 8, wherein the inner layer further includes from about 0.05% to about 0.40% calcium lactate and preferably from about 0.1% to about 0.30% calcium lactate.

15. A beverage comprising the composition of claim 1.

## Patentansprüche

1. Lebensmittelzusammensetzung mit dualer Textur, umfassend:
eine äußere Schicht, die G-Typ-reiches Alginat und M-Typ-reiches Alginat oder Pectin enthält; und
eine innere Schicht, die (i) Fruchtsaft oder Püree, (ii) ein Gummi, (iii) Calciumionen und (iv) ein unlösliches Calciumsalz enthält.

2. Zusammensetzung gemäß Anspruch 1, wobei das innere-Schicht-Gemisch ferner Xanthangummi umfasst, um eine flüssige Textur zu erzeugen.

3. Zusammensetzung gemäß Anspruch 2, wobei das innere-Schicht-Gemisch ferner Konjak- und Xanthangummi kombiniert umfasst, um einen Feststoff zu erzeugen.

4. Zusammensetzung gemäß Anspruch 1, ferner umfassend einen nahrhaften Süßstoff oder einen nicht nahrhaften Süßstoff.

5. Zusammensetzung gemäß Anspruch 1, ferner umfassend einen Zusatzstoff ausgewählt aus der Gruppe bestehend aus Salzen, lebensmittelgeeigneten Säuren, Coffein, Emulgatoren, Stabilisatoren, Antioxidationsmitteln, Farbstoffen, Konservierungsmitteln, energiespendenden Mitteln, Tee, pflanzlichen Mitteln, Mineralstoffen und Vitaminen.

6. Zusammensetzung gemäß Anspruch 1, wobei das Verhältnis von G-Typ-reichem Alginat zu M-Typ-reichem Alginat oder Pectin größer als 1 ist.

7. Zusammensetzung gemäß Anspruch 1, wobei die innere Schicht ferner von etwa 0,05 % bis etwa 0,40 % Calciumlactat und vorzugsweise von etwa 0,1 % bis etwa 0,30 % Calciumlactat enthält.

8. Verfahren zur Herstellung einer Lebensmittelzusammensetzung mit dualer Textur, umfassend:
Kombinieren von G-Typ-reichem Alginat und M-Typ-reichem Alginat oder Pectin, um ein äußere-Schicht-Gemisch zu bilden;
Kombinieren von (i) Fruchtsaft oder Püree, (ii) einem Gummi, (iii) Calciumionen und (iv) einem unlöslichen Calciumsalz, um ein innere-Schicht-Gemisch zu bilden.

9. Verfahren gemäß Anspruch 8, wobei das innere-Schicht-Gemisch ferner Xanthangummi umfasst, um eine flüssige Textur zu erzeugen.

10. Verfahren gemäß Anspruch 8, wobei das innere-Schicht-Gemisch ferner Konjak- und Xanthangummi kombiniert umfasst, um einen Feststoff zu erzeugen.

11. Verfahren gemäß Anspruch 8, wobei das Kombinieren von G-Typ-reichem Alginat und M-Typ-reichem Alginat oder Pectin ferner das Kombinieren eines nahrhaften Süßstoffs oder eines nicht nahrhaften Süßstoffs umfasst.

12. Verfahren gemäß Anspruch 8, wobei das Kombinieren von G-Typ-reichem Alginat und M-Typ-reichem Alginat oder Pectin ferner das Kombinieren eines Zusatzstoffs ausgewählt aus der Gruppe bestehend aus Salzen, lebensmittelgeeigneten Säuren, Coffein, Emulgatoren, Stabilisatoren, Antioxidationsmitteln, Farbstoffen, Konservierungsmitteln, energiespendenden Mitteln, Tee, pflanzlichen Mitteln, Mineralstoffen und Vitaminen umfasst.

13. Verfahren gemäß Anspruch 8, wobei das Kombinieren von G-Typ-reichem Alginat mit M-Typ-reichem Alginat oder Pectin durchgeführt wird, um ein Verhältnis von höher als 1 zu erhalten.

14. Verfahren gemäß Anspruch 8, wobei die innere Schicht ferner von etwa 0,05 % bis etwa 0,40 % Calciumlactat und vorzugsweise von etwa 0,1 % bis etwa 0,30 % Calciumlactat enthält.

15. Getränk, umfassend die Zusammensetzung gemäß Anspruch 1.

## Revendications

1. Composition alimentaire à texture biphasée, comprenant :
une couche externe comportant un alginate de type à taux de G élevé et un alginate de type à taux de M élevé ou une pectine ; et
une couche interne comportant (i) du jus ou de la purée de fruits, (ii) une gomme, (iii) des ions calcium, et (iv) un sel de calcium insoluble.

2. Composition selon la revendication 1, dans laquelle le mélange de couche interne comprend en outre de la gomme xanthane, afin de produire une texture liquide.

3. Composition selon la revendication 2, dans laquelle le mélange de couche interne comprend en outre de la gomme de konjac et xanthane, combinées afin de produire un solide.

4. Composition selon la revendication 1, comprenant en outre un édulcorant nutritif ou un édulcorant non nutritif.

5. Composition selon la revendication 1, comprenant en outre un additif choisi dans le groupe constitué par les sels, les acides de qualité alimentaire, la caféine, les émulsifiants, les stabilisants, les antioxydants, les agents colorants, les conservateurs, les agents énergisants, le thé, les produits botaniques, les minéraux et les vitamines.

6. Composition selon la revendication 1, dans laquelle le rapport de l'alginate de type à taux de G élevé à l'alginate de type à taux de M élevé ou à la pectine est supérieur à 1.

7. Composition selon la revendication 1, dans laquelle la couche interne comporte en outre d'environ 0,05% à environ 0,40% de lactate de calcium et préférablement d'environ 0,1% à environ 0,30% de lactate de calcium.

8. Méthode de préparation d'une composition alimentaire à texture biphasée, comprenant :
l'association d'un alginate de type à taux de G élevé et d'un alginate de type à taux de M élevé ou d'une pectine afin de former un mélange de couche externe ;
l'association (i) de jus ou de purée de fruits, (ii) d'une gomme, (iii) d'ions calcium, et (iv) d'un sel de calcium insoluble, afin de former un mélange de couche interne.

9. Méthode selon la revendication 8, dans laquelle le mélange de couche interne comprend en outre de la gomme xanthane, afin de produire une texture liquide.

10. Méthode selon la revendication 8, dans laquelle le mélange de couche interne comprend en outre de la gomme de konjac et xanthane, combinées afin de produire un solide.

11. Méthode selon la revendication 8, dans laquelle l'association d'un alginate de type à taux de G élevé et d'un alginate de type à taux de M élevé ou d'une pectine comporte en outre l'association d'un édulcorant nutritif ou d'un édulcorant non nutritif.

12. Méthode selon la revendication 8, dans laquelle l'association d'un alginate de type à taux de G élevé et d'un alginate de type à taux de M élevé ou d'une pectine comporte en outre l'association d'un additif choisi dans le groupe constitué par les sels, les acides de qualité alimentaire, la caféine, les émulsifiants, les stabilisants, les antioxydants, les agents colorants, les conservateurs, les agents énergisants, le thé, les produits botaniques, les minéraux et les vitamines.

13. Méthode selon la revendication 8, dans laquelle l'association de l'alginate de type à taux de G élevé et de l'alginate de type à taux de M élevé ou de la pectine est mise en œuvre afin de conduire à un rapport supérieur à 1.

14. Méthode selon la revendication 8, dans laquelle la couche interne comporte en outre d'environ 0,05% à environ 0,40% de lactate de calcium et préférablement d'environ 0,1% à environ 0,30% de lactate de calcium.

15. Boisson comprenant la composition selon la revendication 1.
